# EUROPEAN PATENT SPECIFICATION

(11) **EP 2 983 956 B1**
(45) Date of publication and mention of the grant of the patent: **07.10.2020**
(21) Application number: 14783125.9
(22) Date of filing: 02.04.2014
(51) Int. Cl.: B60W 50/08, G08G 1/0962, B60W 50/00

(54) **PROFILE APPLICATION FOR IN-VEHICLE INFOTAINMENT**
PROFILANWENDUNG FÜR DIE FAHRZEUGINTERNES INFOTAINMENT
APPLICATION DE PROFIL POUR INFORMATION-DIVERTISSEMENT DANS UN VÉHICULE

(30) Priority: 08.04.2013 SE 1350431
(43) Date of publication of application: 17.02.2016
(73) Proprietor: Scania CV AB, 151 87 Södertälje (SE)
(72) Inventor: NORBERG, Jonas, S-151 39 Södertälje (SE); AHO TARKKA, Adeliina, S-115 30 Stockholm (SE); FAGERBERG, Kalle, S-120 62 Stockholm (SE); JOHANSSON, Jonny, S-147 71 Grödinge (SE); WIKMAN, Anders, S-132 35 Saltsjö Boo (SE)
(74) Representative: Scania CV AB
(86) International application number: PCT/SE2014/050393
(87) International publication number: WO 2014/168555

(56) References cited:
- EP-A1- 2 362 355
- WO-A1-2012/144948
- US-A1- 2004 092 253
- US-A1- 2009 164 473
- US-A1- 2010 222 939
- US-B2- 7 565 230

## Description

### TECHNICAL DOMAIN

The invention refers to an in-vehicle or on-board method and infotainment system. More particularly, the invention relates to customization of a program function in the infotainment system.

### BACKGROUND

A vehicle often contains an infotainment system in the form of one or more units with a display for the driver in order to facilitate the journey by said vehicle and/or provide the driver with information or entertainment. Such an infotainment system is sometimes also called a display unit and can contain program functions such as a radio, hands-free telephony, music player, navigation system, computer, background images on the instrument panel and suchlike. Display unit here refers to a unit with some type of display or interaction with the driver, including a visual or auditory display, or interaction with the driver.

Vehicle in this context, for example, refers to a lorry, articulated truck, pickup, delivery van, truck, camper van, maintenance vehicle, passenger car, emergency vehicle, boat, van, four-wheeler, forest tractor, forwarder, excavator, passenger car, automobile, crane lorry, tanker, motorcycle, wheel loader, moped, motor scooter, limousine, saloon, sedan, racing car, radio patrol car, mobile unit, lawnmower, tank, armoured car, snowmobile, weasel, jeep, tracked vehicle, tractor, gokart, bus, coach, combine harvester, agricultural machine, amphibious craft, boat, ferry, cruise liner, submarine, aeroplane, helicopter or other similar engine-powered or motorized means of transport, manned or unmanned, adapted to land, sea or air-based geographical transportation.

The above functions contained in the infotainment system have often been developed on the basis of the needs of the users, which is to say the drivers. However, different drivers can have different needs or preferences in terms of choice of music, language options, the information to be presented, background images and so on.

A particular vehicle in a fleet of vehicles will often be driven by several different drivers, on different occasions; this is in order to take maximum possible advantage of the vehicle. A problem that can then arise is that different drivers have different attitudes or preferences regarding the infotainment system. A particular driver 1 may always listen to death metal when the vehicle is started, while another driver 2 prefers sacred songs interspersed with accordion music. The fact that the radio is tuned to the "wrong" channel when driving of the vehicle starts can lead to irritation in either driver, or both-which is inappropriate during a vehicle journey, since such irritation can end up affecting performance.

Furthermore, tuning in radio channels can be time consuming, as can adjusting other settings on the infotainment system, claiming driving time if such adjustments are made while the vehicle is stationary. This can thus lead to delays in transit time. Alternatively, if the driver tunes in the infotainment system while driving by, say, controlling the steering wheel with his knees while adjusting the infotainment system, this can affect the attention the driver pays to the surrounding traffic situation, which can give rise to an increased risk of accidents.

In cases where different drivers prefer to set the infotainment system to different language options, apart from the added source of irritation this may conceivably entail, it can also make it more difficult or even impossible for the next driver to create a new language option for his or her own preferred language (Esperanto, for instance) in the event of his or her failing to understand the first driver's chosen language (Klingon, for example). If the previous driver has additionally inserted or uploaded e.g. background images of his/her wife/husband/partner, child, pet and/or lucky fishing mascot, the next driver will also be forced to endure having to look at these when in transit if the next driver's attempt to alter the setting in that incomprehensible language fails.

It is worth noting that the many setting options associated with an in-vehicle infotainment system generate an unsolvable complex of problems, which in a worst-case scenario can lead to interpersonal irritation, time lost on the vehicle journey and/or increased risk of accidents during vehicle journeys.

EP 2 326 355 A disclose a tachograph for vehicles tachograph for use in a vehicle, which tachograph comprises a user identification device that can receive user identification data from user identification units such as for instance smart cards. The tachograph also has a memory which can store a plurality of user profiles. A user profile is accessible to a user that via a user identification unit can present matching user identification data. When the data has been verified to match a user profile, the tachograph adapts its functions in accordance with the settings in the user profile.

### SUMMARY

An aim of this invention is therefore to enable a program function in an in-vehicle infotainment system to be individually customized in order to solve at least part of the above-mentioned problem and thus achieve a vehicular improvement.

According to a first aspect of the invention this aim is achieved by a method as defined in claim 1.

According to a second aspect of the invention this aim is achieved by an infotainment system as defined in claim 7.

By granting the vehicle's infotainment system access to identity information (ID) representing an identity card from the vehicle's tachograph (or time-mileage recorder) and storing program function activity in the vehicle's infotainment system connected with this ID, different profiles can be created for different drivers using the vehicle, thus personalizing the on-board infotainment system to a greater degree. In addition the source of irritation can be avoided since the drivers do not need to tune the system every time they are about to drive, thus bringing about an improvement to the vehicle.

Other advantages and additional new distinctive features will be set out in the following detailed description of the invention.

### SCHEDULE OF FIGURES

The invention will now be described in further detail with reference to the attached figures, which illustrate the embodiments of the invention:
**Figure 1A** is an illustration of a vehicle according to one embodiment.
**Figure 1B** is an illustration of a vehicle interior according to one embodiment.
**Figure 2** is a combined signalling and flow chart illustrating one embodiment of the invention.
**Figure 3** is a flow chart illustrating a method according to one embodiment of the invention.
**Figure 4** is an illustration of a control unit according to one embodiment of the invention.

### DETAILED DESCRIPTION OF THE INVENTION

The invention is defined as a method and as an infotainment system which can be realized in some of the embodiments described below. This invention can be implemented in many different forms, however, and should not be seen as being confined to the embodiments described herein, which are intended instead to shed light on and lend clarity to various aspects of the invention.

Additional aspects and distinctive features of the invention may emerge from the following detailed description when considered in conjunction with the figures attached. However, the figures should only be regarded as examples of different embodiments of the invention and should not be seen as a constraint on the invention, which is limited only by the claims attached. Furthermore, the figures are not necessarily to scale and, unless specified to the contrary, are intended to illustrate aspects of the invention conceptually.

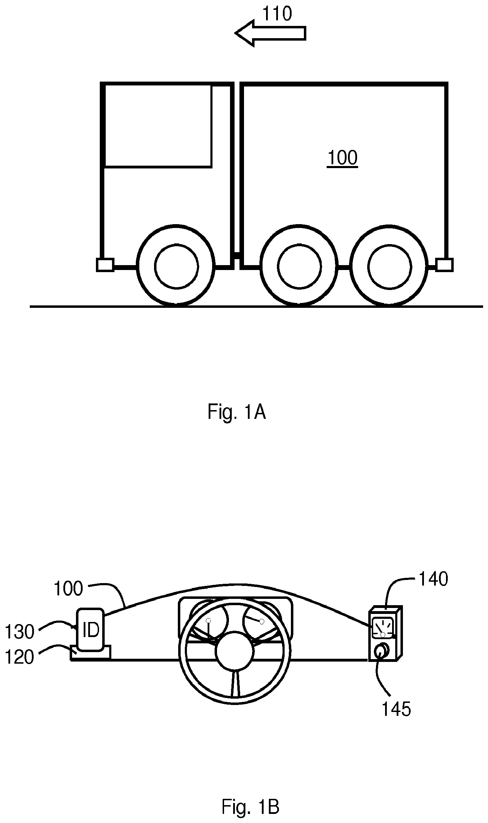

**Figure 1A** shows a vehicle **100,** arranged to include a customized program function in an infotainment system according to one embodiment of the invention. The vehicle 100 is arranged so as to move, for example, in an initial direction **110.**

**Figure 1B** shows a vehicle interior in a vehicle 100, for example the vehicle 100 shown in Figure 1A.

By way of example, a drive time calculating unit 120, an identity card 130, an infotainment system 140 and an input unit 145 can be found In the vehicle 100 in Figure 1B. The drive time calculating unit 120 can be made up of the vehicle's tachograph according to certain embodiments.

As the driver enters the vehicle 100 to commence his drive, the identity card 130 is inserted into a reading device in or connected to the drive time calculating unit 120, such as the tachograph. The infotainment system 140 can then receive identity information (ID) representing the identity card 130 from the drive time calculating unit 120/tachograph. In addition the infotainment system 140 can extract from a memory a program function activity connected to the ID received. The identity card 130 can be made up, for example, of the driver's driver card. This ID can be scanned and sent to the infotainment system 140 continuously via a communication interface, which can be wired or wireless according to certain embodiments.

A particular ID there can have certain settings in the infotainment system 140 stored in this memory, for example media playback such as a music player, media reception such as a radio, navigation, Internet connection, data access, language option or suchlike, as well as level adjustment and/or user preferences, hands-free telephony, games, e-mail, texting, temperature measurement inside and outside the vehicle 100, anti-skid caution, weather forecast, weather report, traffic bulletins, presentation of information related to the vehicle's status, CCTV surveillance, clock, travel time measurement, travel distance measurement, ETA forecast, film screening, radar warning receiver, speed camera warner, game and wildlife warning system, picture display such as displaying personalized background images, driving log, memoranda, app management and suchlike.

Such settings or use of the infotainment system 140 can be related to use when the vehicle 100 is being driven but can also be related to other use when the driver has stopped the vehicle 100 for a rest, as for example with computer/Internet applications, games, TV/film playback and similar instances.

Accordingly, the infotainment system 140 can tune in at least one program function in the infotainment system 140 in accordance with this stored extracted setting.

It is reasonable to assume that the identity card 130 represents the driver of the vehicle 100; if any other drivers borrow the first driver's identity card 130 for any reason, the first driver's infotainment system settings go with the card.

One advantage of this, unlike establishing the identity of the physical driver, is that it is considerably easier and cheaper to scan a code on a card than to establish the identity of the person driving.

Another advantage of the invention is that drivers who happen to have mixed up their identity card 130, for example while having a tipple during a temporary rest, are immediately reminded of this at vehicle start-up when the wrong identity card 130 is inserted into the drive time calculating unit 120, or the tachograph, as the infotainment system 140 has a different setting.

An additional advantage can be that the driver may have multiple identity cards 130, each of which can be associated with various profiles for the infotainment system 140 even though they are actually linked to the same driver as well. The driver may, after all, wish to have different settings depending on variations in mood or, for example, on different days of the week. For instance, Mondays: death metal on the hifi system at maximum volume, a screensaver in the form of simulated flames of fire adjacent to the instrument panel or dashboard; Tuesdays: sounds of the rainforest, simulated aquarium on the screensaver and so on.

In certain embodiments, such as the one visualized in Figure 1B, said communication between the drive time calculating unit 120, or the tachograph, and the infotainment system 140 can be effected via a wireless interface, for example based on one of the following technologies: Global System for Mobile Communications (GSM), Enhanced Data Rates for GSM Evolution (EDGE), Universal Mobile Telecommunications System (UMTS), Code Division Access (CDMA) (CDMA 2000), Time Division Synchronous CDMA (TD-SCDMA), Long-Term Evolution (LTE); Wireless Fidelity (WiFi), defined by the Institute of Electrical and Electronics Engineers' (IEEE) standards 802.11 a, ac, b, g and/or n, the Internet Protocol (IP), Bluetooth and/or Near Field Communication (NFC).

In certain embodiments, communication between the drive time calculating unit 120, or the tachograph, and the infotainment system 140 can be effected via a wired interface, for example based on one of the following technologies in the vehicle 100: Controller Area Network (CAN), Media Oriented Systems Transport (MOST), Ethernet; or outside of the vehicle 110: Ethernet, Universal Serial Bus "USB", Serial RS232, FireWire, Thunderbolt.

By storing individual program function preferences in a memory and linking these to a particular ID, media playback in the vehicle's infotainment system 140 can be customized. In so doing, the infotainment system 140 can be matched to the driver's wishes to always tune into a particular radio station at a certain volume etc., resulting in the infotainment system 140 being tailored to the driver's need for functions, despite multiple drivers using the same infotainment system 140 in a particular vehicle 100.

When driving of the vehicle 100 commences, the driver introduces his driver's card into the drive time calculating unit 120, or the tachograph, and can thus begin or continue the driver's log in the drive time calculating unit 120 or the tachograph. This is a legal requirement in some countries for a particular type of vehicle, for example certain freight and transport vehicles.

One advantage of allowing the navigation unit 120 to access the drive time calculating unit 120, and the ID information kept on the driver's card 130 in the drive time calculating unit 120 related to the driver, or rather the driver's card 130 perhaps, is that it makes use of existing equipment in the vehicle 100, making the invention cheap to implement, as the tachograph, driver's log and driver's card 130 have to be in the vehicle 100 anyway for legal reasons, as previously described.

In addition the driver's identity on the driver's card 130 can be regarded as reliable, given the illegality of manipulating this identity, which will probably deter many people from trying to modify or manipulate it.

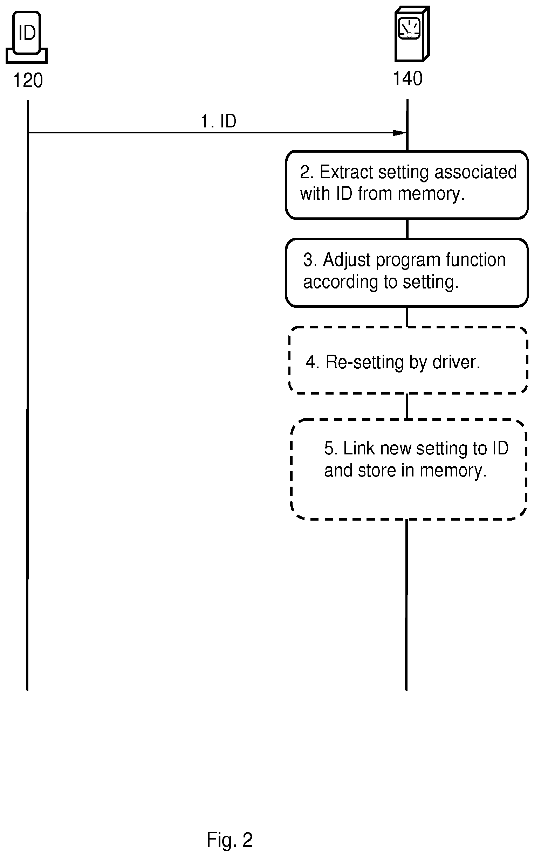

**Figure 2** shows an example of the way a program function can be customized for an infotainment system 140 in a vehicle 100 according to certain embodiments. The combined flow and signalling chart in Figure 2 illustrates a six-stage method for customizing a program function. However, it should be observed that some of the steps described 1-5 can be carried out in a chronological order somewhat different from that suggested by the numerical sequence and that some of them can be carried out in parallel with one another according to various embodiments. What is more, all of the stages described 1-5 will not necessarily occur in all embodiments.

In a first stage the driver puts his identity card 130, such as a driver's card, into the drive time calculating unit 120 or the tachograph. This allows an ID representing the identity card 130 to be scanned by the drive time calculating unit 120 and sent to the infotainment system 140.

On receiving this ID, the infotainment system 140 can extract from a memory a setting or program function activity in the vehicle's infotainment system 140 linked to the ID received.

Such a program function activity may include, say, positioning of the vehicle 100, navigation aids, listening to the radio, telephony, communication on a communicating radio, playing music, talking book playback, sensor signal playback, clock, travel time measurement, travel distance measurement, ETA forecast, fuel consumption, weather forecast, traffic information, presentation of information related to the vehicle's status, camera surveillance, Internet use, multimedia in information, games, screening a film, picture display, communication by e-mail or text, to mention just a few examples imaginable.

The infotainment system 140 can then be adjusted in accordance with this setting or program function activity.

It may also be, however, that once the setting has been made the driver will change or adjust his setting. This may depend, for example, on the ID being scanned from the driver's identity card 130 not having any setting stored or associated with it, or on the driver wishing to change his preferred settings.

When the driver has made such a change to the infotainment system 140 setting, this setting can be saved, for example by linking the new setting for one or more program functions in the infotainment system 140 to the ID represented by the identity card 130 and storing this in a memory.

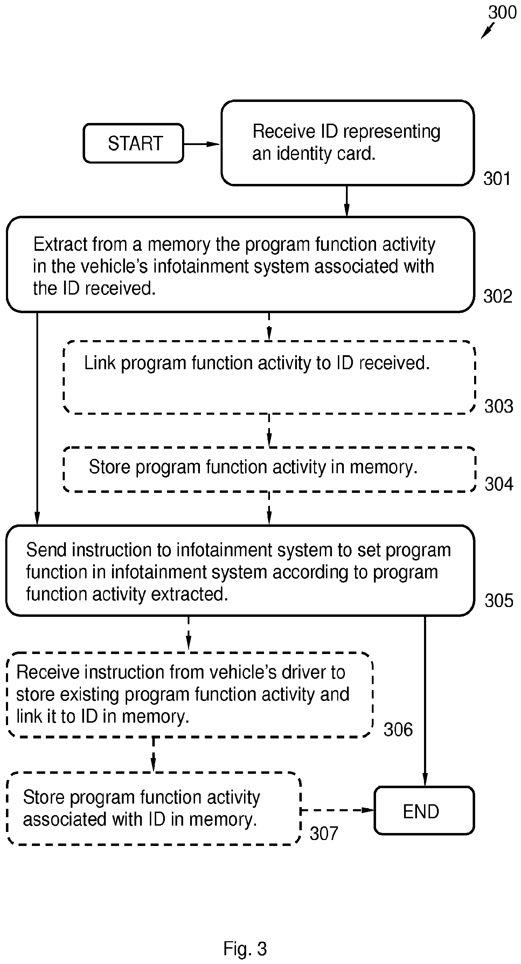

**Figure 3** illustrates an example of an embodiment for the invention. The flow chart in Figure 3 illustrates a method 300 in an infotainment system 140 in a vehicle 100 for customizing a program function including e.g. media playback and reproduction, media reception such as radio, navigation, Internet connection, data access, language option or suchlike in the infotainment system 140.

In order to enable such customization of the program function to be done correctly, the method 300 may include a number of stages 301-307. However, it should be observed that some of the stages described 301-307 can be carried out in a chronological order somewhat different from that suggested by the numerical sequence and that some of them can be carried out in parallel with one another according to different embodiments. Furthermore, certain stages of the method are not necessarily obligatory in all embodiments of the method 300, for example 303, 304, 306 and/or 307. The method 300 includes the following stages:

### Stage 301

Identity information, ID, representing an identity card 130, is received.

The identity information, ID, representing an identity card 130, can be received from a drive time calculating unit 120 in the vehicle 100, such as the vehicle's tachograph in certain embodiments.

### Stage 302

A program function activity in the vehicle's infotainment system 140, associated with the identity information ID received 301, is extracted from a memory 425.

The program function activity can include e.g. activation of the program function, user setting of the program function and/or turning-off of the program function.

The program function activity can also include a set of program function activities linked to a number of program functions in the infotainment system 140 according to certain embodiments.

### Stage 303

This stage of the method is included in some, though not necessarily all, embodiments of the invention when there is no program function activity linked to the identity information, ID, stored in the memory.

Existing program function activity in the infotainment system 140 is linked to the identity information ID received 301.

### Stage 304

This stage of the method is included in some, though not necessarily all, embodiments of the invention when there is no program function activity linked to the identity information, ID, stored in the memory.

The program function activity which has been associated 303 with the identity information ID received 301 is stored in the memory in order to enable the program function in the infotainment system 140 to be set next time the identity information, ID, is received 301.

### Stage 305

The program function in the infotainment system 140 is set in accordance with the program function activity extracted 302.

Such setting of the program function in the infotainment system 140 can relate to any of, for example: media playback and reproduction, media reception such as radio, navigation, Internet connection, data access, language option or suchlike.

In certain embodiments such a program function can include e.g. a setting for positioning the vehicle, navigation aids, listening to the radio, telephony, communication on a communicating radio, playing music, talking book playback, sensor signal playback, clock, travel time measurement, travel distance measurement, ETA forecast, fuel consumption, weather diagnosis, weather forecast, traffic bulletins, presentation of information related to the vehicle's status, camera surveillance, Internet use, games, multimedia information, film screening, displaying pictures, screensavers, communication by e-mail, communication by text, gear selection, engine speed, AC temperature, windscreen wiper speed, headlights on main beam/dipped setting or suchlike.

### Stage 306

This stage of the method is included in some, though not necessarily all, embodiments of the invention.

An instruction to store an existing program function activity and link it to the identity information ID received 301 in the memory is received from the vehicle's driver.

### Stage 307

This stage of the method is included in some, though not necessarily all, embodiments of the invention.

Said program function activity linked to the identity information ID is stored in the memory.

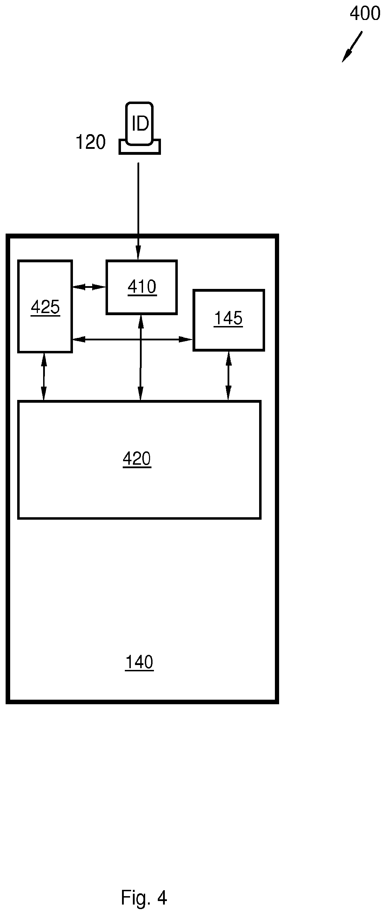

**Figure 4** illustrates one embodiment of an infotainment system 140 in a vehicle 100 for customizing a program function including e.g. media playback and reproduction, media reception such as radio, navigation, Internet connection, data access, language option or suchlike in the infotainment system 140.

This infotainment system 140 is configured to carry out at least some of the methodological stages 301-307 previously described, included in the description of the method 300 for customizing a program function in the infotainment system 140.

In order to be able to individually and correctly customize a program function in an infotainment system 140 in the vehicle 110, the infotainment system 140 includes a number of components detailed in the text below. Some of the subcomponents described occur in some, though not necessarily all, of the embodiments. Additional electronics can also occur in the infotainment system 140, which are not altogether necessary to understand the function of the infotainment system 140 according to the invention.

The infotainment system 140 includes a receiver 410 configured to receive identity information ID representing an identity card 130. For example, the receiver 410 can be configured to receive such identity information ID via a wired or wireless interface from a tachograph 120 or suchlike.

In certain embodiments, moreover, the receiver 410 can be configured to receive an instruction from the vehicle's driver.

The infotainment system 140 also includes a processor circuit 420 configured to extract a program function activity in the infotainment system 140, associated with the identity information ID received, from a memory 425, and also configured to set the program function in accordance with the program function activity extracted.

Said memory 425, also included in the infotainment system 140, is configured to store the program function activity associated with the identity ID received.

Furthermore, according to some embodiments, the processor circuit 420 can be configured to detect an existing program function activity in the infotainment system 140. The processor circuit 420 can also be configured to link said program function activity to the identity information ID received.

In certain embodiments the processor circuit 420 can also be configured to link an existing program function activity in the vehicle's infotainment system 140 to the identity information ID, according to an instruction received, for example.

The processor circuit 420 can be made up of, for instance, one or more Central Processing Units (CPU), a microprocessor or other logic designed to interpret and execute instructions and/or to read and write data. The processor circuit 420 can handle data for the inflow, outflow or processing of data, including buffering of data, control functions and suchlike.

In certain embodiments the memory unit 425 in the infotainment system 140 can be made up of a data storage medium. The memory unit 425 can be made up, for instance, of a memory card, flash memory, USB memory, hard disk or other similar data storage unit, for example one from the group: ROM (Read-Only Memory), PROM (Programmable Read-Only Memory), EPROM (Erasable PROM), Flash memory, EEPROM (Electrically Erasable PROM) etc. in different embodiments.

According to certain embodiments the vehicle 100 includes a number of memories 425 for storing program function activity in the vehicle's infotainment system 140 linked to the identity information ID received, possibly together with associated information.

Furthermore, the invention includes a computer program in the infotainment system 140 for customizing a program function in an infotainment system 140 in a vehicle 100. The computer program is configured to carry out the method 300 according to at least one of the methodological stages previously described 301-303 when the computer program is executed in a processor circuit 420 in the infotainment system 140.

The method 300 according to stages 301-303 for customizing a program function in an infotainment system 140 in a vehicle 100 can be implemented through one or more processor circuits 420 in the infotainment system 140 together with computer program code for carrying out one, some, certain or all of the stages 301-303 described above, thereby enabling a computer program to include instructions for executing stages 301-303 when the computer program is loaded in the processor circuit 420.

Moreover, the invention according to certain embodiments includes a system 400 for customizing a program function in an infotainment system 140 in a vehicle 100. This system 400 includes an infotainment system 140 according to any of the embodiments previously described and a drive time calculating unit 120, such as the vehicle's tachograph, configured to extract identity information ID from a connected identity card 130 and configured to send the identity information ID to the infotainment system 140.

In addition the system 400 and/or the infotainment system 140 can include an input unit 145 configured to receive an instruction from the vehicle's driver in order to store an existing program function activity and link it to the identity information ID in a memory 425.

Some embodiments of the invention also include a vehicle 100 that includes a system 400 for customizing a program function in an infotainment system 140 in the vehicle 100, as described above.

## Claims

1. Method (300) for an infotainment system (140) in a vehicle (100) for customizing a program function including, for example, media playback and reproduction, media reception such as radio, navigation, Internet connection, data access, language option or suchlike in the infotainment system (140), which system communicates with a drive time calculation unit in the vehicle, further the method (300) **is characterized by:**
reception (301) of identity information (ID) representing an identity card (130),
extraction (302) of a program function activity in the vehicle's infotainment system (140), linked to the identity information (ID) received (301), from a memory (425) arranged in said infotainment system (140),
setting (305) of the program function in the infotainment system (140) in accordance with the program function activity extracted (302), wherein the identity information (ID) representing an identity card (130) is received from a drive time calculating unit (120) in the vehicle (100), such as the vehicle's tachograph.

2. The method (300) according to claim 1, which, when there is no program function activity associated with the identity information (ID) stored in the memory (425), further includes:
linking (303) of existing program function activity in the infotainment system (140) with the identity information (ID) received (301),
storage (304) of the associated (303) program function activity in the memory (425) in order to enable the program function in the infotainment system (140) to be set (305) next time the identity information (ID) is received (301).

3. The method (300) according to any of claims 1-2, in which the program function activity includes: activation of the program function, user setting of the program function and/or turning-off of the program function.

4. The method (300) according to any of claims 1-3, in which the program function activity includes a set of program function activities associated with a number of program functions in the infotainment system (140).

5. The method (300) according to any of claims 1-4, in which the setting (305) of the program function in the infotainment system (140) relates to any of: media playback and reproduction, media reception such as radio, navigation, Internet connection, data access, language option or suchlike.

6. The method (300) according to any of claims 1-5, also including:
reception (306) of an instruction from the vehicle's driver to store an existing program function activity and link it to the identity information (ID) received (301) in the memory (425),
storage (307) of said program function activity associated with the identity information (ID) in the memory (425).

7. Infotainment system (140) for use in a vehicle (100) for customizing a program function including, for example, media playback and reproduction, media reception such as radio, navigation, Internet connection, data access, language option or suchlike in the infotainment system (140), **characterized by:**
a receiver (410) configured to receive identity information (ID) representing an identity card (130),
a processor circuit (420) configured to extract a program function activity in the infotainment system (140), linked to the identity information (ID) received, from a memory (425) arranged in said infotainment system (140), and configured to set the program function in accordance with the program function activity extracted,
a memory (425) configured in said infotainment system (140) to store the program function activity associated with the identity (ID) received, wherein the receiver (410) is arranged to receive the identity information (ID) representing an identity card (130) from a drive time calculating unit (120) in the vehicle (100), such as the tachograph.

8. The infotainment system (140) according to claim 7, whereby the processor circuit (420) is further configured to detect an existing program function activity in the infotainment system (140) and configured to link said program function activity to the identity information (ID) received.

9. The infotainment system (140) according to either claim 7 or claim 8, in which:
the receiver (410) is also configured to receive an instruction from the vehicle's driver, and
the processor circuit (420) is also configured to link an existing program function activity in the vehicle's infotainment system (140) with the identity information (ID), according to the instruction received.

10. Computer program in an infotainment system (140) according to any of claims 7-9 for customizing a program function in an infotainment system (140) in a vehicle (100), whereby the computer program is configured to perform the method (300) according to any of claims 1-6 when the computer program is executed in a processor circuit (420) in the infotainment system (140).

11. System (400) for customizing a program function in an infotainment system (140) in a vehicle (100), including:
an infotainment system (140) according to any of claims 7-9,
a drive time calculating unit (120) such as the vehicle's tachograph configured to extract identity information (ID) from a connected identity card (130) and configured to send the identity information (ID) to the infotainment system (140).

12. The system (400) according to claim 11, also including:
an input unit (145) configured to receive an instruction from the vehicle's driver in order to store an existing program function activity and link it to the identity information (ID) in a memory (425) arranged in said infotainment system (140).

13. Vehicle (100) including a system (400) for customizing a program function in an infotainment system (140) in the vehicle (100) according to either claim 11 or claim 12.

## Patentansprüche

1. Verfahren (300) für ein Infotainmentsystem (140) in einem Fahrzeug (100) zur individuellen Anpassung einer Programmfunktion einschließlich einer Medienwiedergabe, eines Medienempfangs wie beispielsweise Radio, einer Navigation, einer Internetverbindung, eines Datenzugriffs, einer Sprachenoption oder ähnliches in dem Infotainmentsystem (140), wobei das System mit einer Fahrzeitberechnungseinheit in dem Fahrzeug kommuniziert, und wobei das Verfahren (300) ferner **gekennzeichnet ist durch**:
einen Empfang (301) von Identitätsinformation (ID), welche einen Ausweis (130) repräsentiert,
eine Extraktion (302) einer Programmfunktionsaktivität in dem Infotainmentsystem (140) des Fahrzeugs, die mit der empfangenen (301) Identitätsinformation (ID) verknüpft ist, aus einem in dem Infotainmentsystem (140) angeordneten Speicher (425),
ein Einstellen (305) der Programmfunktion in dem Infotainmentsystem (140) in Übereinstimmung mit der extrahierten (302) Programmfunktionsaktivität, wobei die einen Ausweis (130) repräsentierende Identitätsinformation (ID) von einer Fahrzeitberechnungseinheit (120) in dem Fahrzeug (100), wie beispielsweise dem Fahrtenschreiber des Fahrzeugs, empfangen wird.

2. Verfahren (300) nach Anspruch 1, das, wenn keine Programmfunktionsaktivität mit der in dem Speicher (425) gespeicherten Identitätsinformation (ID) assoziiert ist, ferner umfasst:
Verknüpfen (303) existierender Programmfunktionsaktivität in dem Infotainmentsystem (140) mit der empfangenen (301) Identitätsinformation (ID),
Speichern (304) der assoziierten (303) Programmfunktionsaktivität in dem Speicher (425), um es zu ermöglichen, dass die Programmfunktion in dem Infotainmentsystem (140) eingestellt wird (305), wenn die Identitätsinformation (ID) das nächste Mal empfangen wird (301).

3. Verfahren (300) nach einem der Ansprüche 1 bis 2, wobei die Programmfunktionsaktivität umfasst: eine Aktivierung der Programmfunktion, eine benutzerseitige Einstellung der Programmfunktion und/oder ein Ausschalten der Programmfunktion.

4. Verfahren (300) nach einem der Ansprüche 1 bis 3, wobei die Programmfunktionsaktivität einen Satz von Programmfunktionsaktivitäten enthält, der mit einer Reihe von Programmfunktionen in dem Infotainmentsystem (140) assoziiert ist.

5. Verfahren (300) nach einem der Ansprüche 1 bis 4, wobei das Einstellen (305) der Programmfunktion in dem Infotainmentsystem (140) ein jegliches betrifft aus: eine Medienwiedergabe, einen Medienempfang wie etwa Radio, eine Navigation, eine Internetverbindung, einen Datenzugriff, eine Sprachenoption oder ähnliches.

6. Verfahren (300) nach einem der Ansprüche 1 bis 5, ferner umfassend:
einen Empfang (306) einer Anweisung von dem Fahrer des Fahrzeugs zum Speichern einer existierenden Programmfunktionsaktivität und Verknüpfen derselben mit der empfangenen (301) Identitätsinformation (ID) in dem Speicher (425),
ein Speichern (307) der Programmfunktionsaktivität verbunden mit der Identitätsinformation (ID) in dem Speicher (425).

7. Infotainmentsystem (140) zur Verwendung in einem Fahrzeug (100) zur individuellen Anpassung einer Programmfunktion einschließlich zum Beispiel einer Medienwiedergabe, eines Medienempfangs wie etwa Radio, einer Navigation, einer Internetverbindung, eines Datenzugriffs, einer Sprachenoption oder ähnliches in dem Infotainmentsystem (140), **gekennzeichnet durch**:
einen Empfänger (410), der dazu eingerichtet ist, einen Ausweis (130) repräsentierende Identitätsinformation (ID) zu empfangen,
eine Prozessorschaltung (420), die dazu eingerichtet ist, eine Programmfunktionsaktivität in dem Infotainmentsystem (140), die mit der empfangenen Identitätsinformation (ID) verknüpft ist, aus einem in dem Infotainmentsystem (140) angeordneten Speicher (425) zu extrahieren, und dazu eingerichtet ist, die Programmfunktion in Übereinstimmung mit der extrahierten Programmfunktionsaktivität einzustellen,
einen Speicher (425), der in dem Infotainmentsystem (140) dazu eingerichtet ist, die mit der empfangenen Identität (ID) assoziierte Programmfunktionsaktivität zu speichern, wobei der Empfänger (410) dazu angeordnet ist, einen Ausweis (130) repräsentierende Identitätsinformation (ID) von einer Fahrzeitberechnungseinheit (120) in dem Fahrzeug (100) wie etwa dem Fahrtenschreiber zu empfangen.

8. Infotainmentsystem (140) nach Anspruch 7, wobei die Prozessorschaltung (420) ferner dazu eingerichtet ist, eine existierende Programmfunktionsaktivität in dem Infotainmentsystem (140) zu erfassen, und dazu eingerichtet ist, diese Programmfunktionsaktivität mit der empfangenen Identitätsinformation (ID) zu verknüpfen.

9. Infotainmentsystem (140) nach entweder Anspruch 7 oder Anspruch 8, wobei:
der Empfänger (410) auch dazu eingerichtet ist, eine Anweisung von dem Fahrer des Fahrzeugs zu empfangen, und
die Prozessorschaltung (420) auch dazu eingerichtet ist, eine in dem Infotainmentsystem (140) des Fahrzeugs existierende Programmfunktionsaktivität gemäß der empfangenen Anweisung mit der Identitätsinformation (ID) zu verknüpfen.

10. Computerprogramm in einem Infotainmentsystem (140) nach einem der Ansprüche 7 bis 9 zur individuellen Anpassung einer Programmfunktion in einem Infotainmentsystem (140) in einem Fahrzeug (100), wobei das Computerprogramm dazu eingerichtet ist, das Verfahren (300) nach einem der Ansprüche 1 bis 6 durchzuführen, wenn das Computerprogramm in einer Prozessorschaltung (420) in dem Infotainmentsystem (140) ausgeführt wird.

11. System (400) zur individuellen Anpassung einer Programmfunktion in einem Infotainmentsystem (140) in einem Fahrzeug (100), umfassend:
ein Infotainmentsystem (140) nach einem der Ansprüche 7 bis 9,
eine Fahrzeitberechnungseinheit (120) wie etwa den Fahrtenschreiber des Fahrzeugs, die dazu eingerichtet ist, von einem verbundenen Ausweis (130) Identitätsinformation (ID) zu extrahieren, und dazu eingerichtet ist, die Identitätsinformation (ID) an das Infotainmentsystem (140) zu senden.

12. System (400) nach Anspruch 11, ferner umfassend:
eine Eingabeeinheit (145), die dazu eingerichtet ist, eine Anweisung von dem Fahrer des Fahrzeugs zu empfangen, um eine existierende Programmfunktionsaktivität zu speichern und sie mit der Identitätsinformation (ID) in einem Speicher (425) zu verknüpfen, der in dem Infotainmentsystem (140) angeordnet ist.

13. Fahrzeug (100), umfassend ein System (400) zur individuellen Anpassung einer Programmfunktion in einem Infotainmentsystem (140) in dem Fahrzeug (100) nach entweder Anspruch 11 oder Anspruch 12.

## Revendications

1. Procédé (300) pour un système d'infodivertissement (140) dans un véhicule (100) pour la personnalisation d'une fonction de programme comprenant, par exemple, la lecture et la reproduction de médias, la réception de médias comme la radio, la navigation, la connexion Internet, l'accès à des données, l'option de langue ou autres dans le système d'infodivertissement (140), lequel système communique avec une unité de calcul de temps de conduite dans le véhicule, en outre le procédé (300) **se caractérise par** :
la réception (301) d'informations d'identité (ID) représentant une carte d'identité (130),
l'extraction (302) d'une activité de fonction de programme dans le système d'infodivertissement du véhicule (140), liée aux informations d'identité (ID) reçues (301), à partir d'une mémoire (425) agencée dans ledit système d'infodivertissement (140),
le réglage (305) de la fonction de programme dans le système d'infodivertissement (140) conformément à l'activité de fonction de programme extraite (302), dans laquelle les informations d'identité (ID) représentant une carte d'identité (130) sont reçues à partir d'une unité de calcul de temps de conduite (120) dans le véhicule (100), telle que le tachygraphe du véhicule.

2. Procédé (300) selon la revendication 1, qui, lorsqu'il n'existe aucune activité de fonction de programme associée aux informations d'identité (ID) stockées dans la mémoire (425), comprend en outre :
la liaison (303) d'une activité de fonction de programme existante dans le système d'infodivertissement (140) avec les informations d'identité (ID) reçues (301),
le stockage (304) de l'activité de fonction de programme associée (303) dans la mémoire (425) afin d'activer la fonction de programme dans le système d'infodivertissement (140) à régler (305) la prochaine fois que les informations d'identité (ID) sont reçues (301) .

3. Procédé (300) selon l'une quelconque des revendications 1-2, dans lequel l'activité de fonction de programme comprend : l'activation de la fonction de programme, le réglage utilisateur de la fonction de programme et/ ou la désactivation de la fonction de programme.

4. Procédé (300) selon l'une quelconque des revendications 1-3, dans lequel l'activité de fonction de programme comprend un ensemble d'activités de fonction de programme associées à un certain nombre de fonctions de programme dans le système d'infodivertissement (140).

5. Procédé (300) selon l'une quelconque des revendications 1-4, dans lequel le réglage (305) de la fonction de programme dans le système d'infodivertissement (140) se rapporte à l'un quelconque parmi : la lecture et la reproduction de médias, la réception de médias comme la radio, la navigation, la connexion Internet, l'accès à des données, l'option de langue ou autres.

6. Procédé (300) selon l'une quelconque des revendications 1 - 5, comprenant aussi :
la réception (306) d'une instruction du conducteur du véhicule pour stocker une activité de fonction de programme existante et la lier aux informations d'identité (ID) reçues (301) dans la mémoire (425),
le stockage (307) de ladite activité de fonction de programme associée aux informations d'identité (ID) dans la mémoire (425) .

7. Système d'infodivertissement (140) pour utilisation dans un véhicule (100) pour la personnalisation d'une fonction de programme comprenant, par exemple, la lecture et la reproduction de médias, la réception de médias comme la radio, la navigation, la connexion Internet, l'accès à des données, l'option de langue ou autres dans le système d'infodivertissement (140), **caractérisé par** :
un récepteur (410) configuré pour recevoir des informations d'identité (ID) représentant une carte d'identité (130),
un circuit de processeur (420) configuré pour extraire une activité de fonction de programme dans le système d'infodivertissement (140), liée aux informations d'identité (ID) reçues, à partir d'une mémoire (425) agencée dans ledit système d'infodivertissement (140), et configurée pour régler la fonction de programme conformément à l'activité de fonction de programme extraite,
une mémoire (425) configurée dans ledit système d'infodivertissement (140) pour stocker l'activité de fonction de programme associée à l'identité (ID) reçue, dans lequel le récepteur (410) est agencé pour recevoir les informations d'identité (ID) représentant une carte d'identité (130) à partir d'une unité de calcul de temps de conduite (120) dans le véhicule (100), telle que le tachygraphe.

8. Système d'infodivertissement (140) selon la revendication 7, dans lequel le circuit du processeur (420) est en outre configuré pour détecter une activité de fonction de programme existante dans le système d'infodivertissement (140) et configuré pour lier ladite activité de fonction de programme aux informations d'identité (ID) reçues.

9. Système d'infodivertissement (140) selon l'une quelconque des revendications 7 ou 8, dans lequel :
le récepteur (410) est également configuré pour recevoir une instruction du conducteur du véhicule, et
le circuit du processeur (420) est également configuré pour relier une activité de fonction de programme existante dans le système d'infodivertissement du véhicule (140) avec les informations d'identité (ID), conformément aux instructions reçues.

10. Programme informatique dans un système d'infodivertissement (140) selon l'une quelconque des revendications 7-9 pour la personnalisation d'une fonction de programme dans un système d'infodivertissement (140) dans un véhicule (100), où le programme informatique est configuré pour exécuter le procédé (300) selon l'une quelconque des revendications 1-6 lorsque le programme informatique est exécuté dans un circuit du processeur (420) dans le système d'infodivertissement (140).

11. Système (400) pour la personnalisation d'une fonction de programme dans un système d'infodivertissement (140) dans un véhicule (100), comprenant :
un système d'infodivertissement (140) selon l'une quelconque des revendications 7-9,
une unité de calcul de temps de conduite (120) telle que le tachygraphe du véhicule configurée pour extraire des informations d'identité (ID) à partir d'une carte d'identité connectée (130) et configurée pour envoyer les informations d'identité (ID) au système d'infodivertissement (140).

12. Système (400) selon la revendication 11, comprenant également :
une unité d'entrée (145) configurée pour recevoir une instruction du conducteur du véhicule afin de stocker une activité de fonction de programme existante et de la lier aux informations d'identité (ID) dans une mémoire (425) agencée dans ledit système d'infodivertissement (140).

13. Véhicule (100) comprenant un système (400) pour la personnalisation d'une fonction de programme dans un système d'infodivertissement (140) dans le véhicule (100) selon l'une quelconque de la revendication 11 ou de la revendication 12.
